(19)

Europäisches
Patentamt
European
Patent Office
Office européen
des brevets

(11) **EP 2 450 891 A1**

(12) **EUROPEAN PATENT APPLICATION**

(43) Date of publication:
**09.05.2012 Bulletin 2012/19**

(51) Int Cl.:
***G11B 7/09*** *(2006.01)*     ***G11B 7/13*** *(2012.01)*
***G11B 7/135*** *(2012.01)*

(21) Application number: **11188433.4**

(22) Date of filing: **09.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.11.2010   JP 2010250921**

(71) Applicant: **Funai Electric Co., Ltd.
Daito-shi
Osaka 574-0013 (JP)**

(72) Inventors:
• **Ikeda, Atsushi
Daito-shi,
Osaka 574-0013 (JP)**
• **Okamoto, Kenji
Daito-shi,
Osaka 574-0013 (JP)**

(74) Representative: **Grünecker, Kinkeldey,
Stockmair & Schwanhäusser
Leopoldstrasse 4
80802 München (DE)**

(54) **Optical pickup**

(57)     There is provided an optical pickup having a first diffractive optical element that acts on light of a specific wavelength, the first diffractive optical element being arranged in an optical path for guiding reflected light from an optical disk to a photodetector. The photodetector comprises a first detector including a first main light receiver divided into a two-by-two square matrix, and a second detector including a second main light receiver divided into a two-by-two square matrix, the second detector being arranged in a row with the first detector. In the case that the light of a specific wavelength is used, zero-order light of the first diffractive optical element is received by the first main light receiver, +first-order light (or -first-order light) diffracted by the first diffractive optical element is received by the second main light receiver, and a tracking error signal is generated using an output signal from the second main light receiver.

FIG.2

EP 2 450 891 A1

**Description**

*BACKGROUND OF THE INVENTION*

**1. Field of the Invention**

The present invention relates to an optical pickup used for reading information recorded on an optical disk and/or writing information to an optical disk.

**2. Description of Related Art**

There are known in the art optical pickups used for reading and writing information from and to Blu-Ray discs ("BDs"), digital versatile discs ("DVDs"), compact discs ("CDs"), and other optical disks. The optical pickup includes an objective lens for focusing light emitted from a light source on an information-recording surface of the optical disk.

The position of the light spot focused by the objective lens must be controlled in the following manner in the case that the optical pickup is used to read information from the optical disk or write information to the optical disk. First, the light spot focused by the objective lens must be controlled so as to be constantly present on the information-recording surface of the optical disk (focusing control). Second, the light spot focused by the objective lens on the information-recording surface must be controlled so as to constantly follow the tracks formed on the optical disk (tracking control).

Therefore, the optical pickup is provided with a photodetector (PDIC) for receiving reflected light (returned light) that has been reflected by the optical disk. In the optical pickup, a focus error (FE) signal for expressing the degree of offset between the light spot and the information-recording surface (target information-recording surface), and a tracking error (TE) signal for expressing the degree of offset between the light spot and the track (target track) are calculated based on signals outputted by the photodetector. A control (focusing control) is performed for moving the position of the objective lens in the focus direction on the basis of the FE signal, and a control (tracking control) is performed for moving the position of the objective lens in the tracking direction on the basis of the TE signal.

The focus direction is a direction perpendicular to the information-recording surface of the optical disk, and the tracking direction is a direction parallel to the radial direction (Rad direction) of the optical disk.

Known methods for calculating the TE signal have conventionally included the push-pull (PP) technique and the differential push-pull (DPP) technique. There is also a method for generating a TE signal using a holographic element (diffractive optical element) arranged in the optical path over which the returned light passes, as described in, for example, Japanese Patent Application No. 2010-44847.

*SUMMARY OF THE INVENTION*

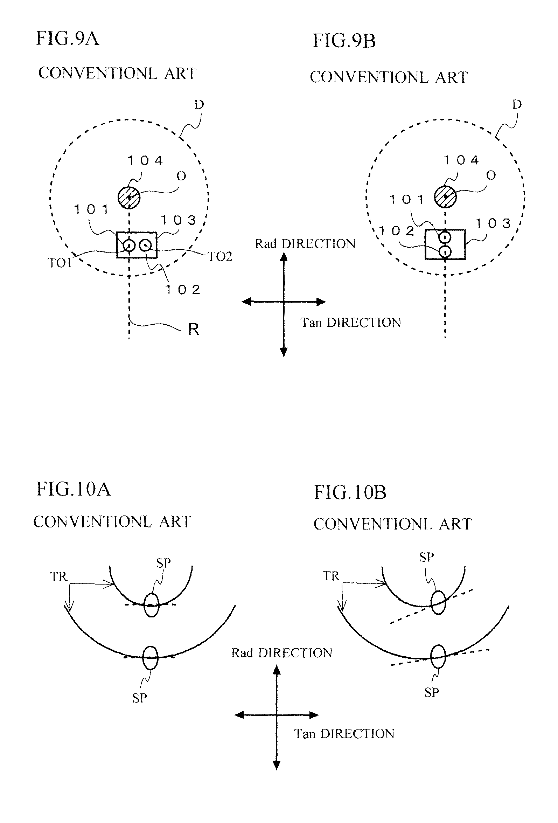

The DPP technique is a scheme for minimizing the effect of lens shift (offset of the objective lens in the tracking direction) and obtaining a TE signal, and is widely used in the art in optical pickups. However, there are cases in which a TE signal cannot be generated using the DPP technique in, for example, an optical pickup that has two objective lenses wherein the two objective lenses are arranged in a row in the tangential direction (Tan direction). A related description is provided below with reference to Figs. 9A, 9B, 10A, and 10B. The Tan direction is the direction parallel to the tangent of the track of the optical disk, and perpendicular to the Rad direction.

Fig. 9A shows a configuration in which two objective lenses 101, 102 have been arranged in a row in the Tan direction (may be referred to hereinbelow as "Tan arrangement"). Fig. 9B shows a configuration in which the two objective lenses 101, 102 have been arranged in a row in the Rad direction (may be referred to hereinbelow as "Rad arrangement"), and is used for comparative purposes. In Figs. 9A and 9B, the reference numeral 103 is an optical pickup, which optical pickup 103 is capable of moving in the Rad direction. Reference numeral 104 is a turntable for rotating an optical disk D.

In the case that the two objective lenses 101, 102 are configured in a Rad arrangement (see Fig. 9B), the second objective lens 102 is less likely than the first objective lens 101 to come near to the center 0 of the optical disk D. Therefore, in the optical disk D in which information is read and written using the second objective lens 102, more wasted regions that cannot be used will be present on the internal peripheral side. In regard thereto, the first objective lens 101 and the second objective lens 102 can be brought equally close to the center of the optical disk D when a configuration is used in which the two objective lenses 101, 102 are in a Tan arrangement, as shown in Fig. 9A.

In the case that the two objective lenses 101, 102 are configured in a Tan arrangement, a configuration is typically assumed in which the center T01 of one of the objective lenses (in this case, the first objective lens 101) is situated on a reference plane R that passes through the center of the turntable 104 (which is the same as the center O of the optical disk), as shown in Fig. 9A. The reference plane R is a plane that is parallel to the movement direction (Rad direction) of the optical pickup 103 and perpendicular to the plate surface of the optical disk.

In this case, the relative positional relationship between the track TR and the light spot SP focused by the objective lens (first objective lens 101) which has its center on the reference plane R does not change even if the optical pickup 103 moves in the Rad direction, as shown in Fig. 10A.

In the case that the objective lens (second objective lens 102) having its center in a position offset from the reference plane R is used, the relative positional relationship between the track TR and the light spot SP focused by the objective lens varies depending on the position of the optical pickup 103 in the Rad direction (see Fig. 10B). Specifically, when the optical pickup 103 moves, for example, from the inside periphery to the outside periphery, the tangential direction of the track TR rotates in relation to the light spot SP (rotates in the clockwise direction in Fig. 10B).

With the DPP technique, light emitted from a light source is divided into three beams composed of a main beam and two sub beams by a diffractive lattice (grating), and used to irradiate the optical disk. The sub beams generated by the grating must be accurately adjusted for position in the direction that cuts across the track TR (pitch direction). However, in the case that the two objective lenses 101, 102 are in a Tan arrangement, the relative positional relationship between the light spot SP and the track TR varies depending on the position of the optical pickup 103, as described above, in the case that the objective lens having its center in a position offset from the reference plane R (the second objective lens 102 in the example described above) is used. Therefore, when the two objective lenses 101, 102 are configured in a Tan arrangement, the conventional DPP technique cannot be used in the case that the objective lens having its center in a position offset from the reference plane R is used.

It is possible to consider applying a scheme in which a holographic element (diffractive optical element) is used as a scheme for obtaining the TE signal using a method other than the DPP technique; for example, as described in Japanese Patent Application No. 2010-44847. However, according to the configuration in Japanese Patent Application No. 2010-44847, it is necessary to prepare a special photodetector (PDIC) whose configuration is different from that of the light receiver used in the conventional DPP technique or the like (a configuration in which there are aligned in a row a main light receiver quadrisected into a two-by-two square matrix and two sub light receivers provided on either side of the main light receiver). In other words, a problem is presented in that a photodetector must be newly fabricated, costs increase, and a long manufacturing time period is required.

However, with the scheme in which a TE signal is obtained using a diffractive optical element arranged in the optical path over which light reflected from the optical disk is guided toward the photodetector, the light utilization ratio is improved and other advantages are presented. Therefore, it would be very useful to be able to use a conventionally used general-purpose photodetector while making use of a diffractive optical element.

In view of the above points, an object of the present invention is to provide an optical pickup that is provided with a diffractive optical element in the optical path through which returned light passes, and in which a tracking error signal can be suitably obtained using a photodetector having a general-purpose light-receiving pattern.

In order to achieve the above-stated object, the present invention provides an optical pickup having a first diffractive optical element that acts on light of a specific wavelength, the first diffractive optical element being arranged in an optical path for guiding reflected light from an optical disk to a photodetector, wherein the photodetector comprises a first detector including a first main light receiver divided into a two-by-two square matrix, and a second detector including a second main light receiver divided into a two-by-two square matrix, the second detector being arranged in a row with the first detector; and in the case that the light of a specific wavelength is used, zero-order light of the first diffractive optical element is received by the first main light receiver, a first-order light among the $\pm$first-order light diffracted by the first diffractive optical element is received by the second main light receiver, and a tracking error signal is generated using an output signal from the second main light receiver.

In accordance with the present configuration, a tracking error (TE) signal generated using a diffractive optical element can be acquired by a photodetector having a general-purpose light-receiving pattern in the case that light of a specific wavelength is used. Also, in the case that light of a specific wavelength is used, the light utilization ratio can be increased in comparison with the case in which a TE signal is generated using, for example, the DPP method, because the configuration is one in which a TE signal is obtained using a diffractive optical element arranged in the optical path through which returned light passes.

In the optical pickup of the configuration described above, the first main light receiver and two first sub light receivers arranged so as to be disposed on both sides of the first main light receiver may be aligned in a row in the first detector; the second main light receiver and two second sub light receivers arranged so to be disposed on both sides of the second main light receiver may be aligned in a row in the second detector; and the first main light receiver and the second main light receiver may be adjacently arranged. The present configuration corresponds to an example of the case in which a photodetector having a conventionally used general-purpose light-receiving pattern is used.

In the optical pickup of the above-described configuration, it is preferred that reflected light reflected by the optical disk include zero-order light and $\pm$first-order light, and that the first diffractive optical element have a first diffraction region in which light is incident, the light resulting from superposition of zero-order light and +first-order light included in the reflected light; a second diffraction region in which light is incident, the light resulting from superposition of zero-order light and -first-order light included in the reflected light, and the second diffraction region being symmetrically arranged in relation to the first diffraction region; a third diffraction region wherein the $\pm$first-order light included in the reflected light is entirely not or substantially not incident, and the zero-order light is incident, the third diffraction region being located on the same side as the first diffraction region relative to the line of symmetry between the symmetrically arranged first diffraction region and second diffraction region; and a fourth diffraction region wherein the $\pm$first-order light included in the reflected light is entirely not or substantially not incident, and the zero-order light is incident, the fourth diffraction region being located on the same side as the second diffraction region relative to the line of symmetry; wherein either +first-order light or -first-order light from among the $\pm$first-order light diffracted by the diffraction regions of the first diffractive optical element arrives in separate regions of the second main light receiver. In accordance with the present configuration, it is possible to obtain a suitable TE signal in which the effects of lens shift, optical disk tilt, and the like are inhibited.

The optical pickup of the above-described configuration preferably further comprises a lens arranged between the first diffractive optical element and the photodetector and provided with a cylindrical surface, wherein the diffraction regions of the first diffractive optical element are provided so that an astigmatism of reverse polarity relative to an astigmatism imparted by the cylindrical surface is imparted to first-order light that is diffracted by the diffraction regions and arrives at the second main light receiver. With such a configuration, first-order light (diffracted light) that arrives at the second main light receiver from the first diffractive optical element can be focused without departure from the target region.

The optical pickup of the above-described configuration may further comprise a first light source for emitting light of a first wavelength; a second light source for emitting light of a second wavelength; and a third light source for emitting light of a third wavelength, wherein a tracking error signal is generated using a signal outputted from the first detector in the case that the light of a first wavelength is used; a tracking error signal is generated using a signal outputted from the second detector in the case that the light of a second wavelength is used; and the light of a third wavelength is the light of a specific wavelength. In such a configuration, for example, the first light source can be a DVD-compatible light source, the second light source can be a CD-compatible light source, and the third light source can be a BD-compatible light source.

In the optical pickup of the above-described configuration, light of a first wavelength emitted from the first light source may be divided into a main beam and two sub beams by a second diffractive optical element and be incident on the optical disk; and a tracking error signal may be obtained by the differential push-pull (DPP) method in the case that the light of a first wavelength is used. In the present configuration, the effect of the first diffractive optical element is inhibited in the case of DVD compatibility, and a TE signal produced by the DPP method can be suitably obtained.

The optical pickup of the above-described configuration may further comprise: a first objective lens for focusing the light of a first wavelength and the light of a second wavelength on an information-recording surface of the optical disk; and a second objective lens for focusing the light of a third wavelength on an information-recording surface of the optical disk. In the case of this configuration, the first objective lens and the second objective lens may be arranged in a row in a direction that is parallel to a tangential direction of tracks on the optical disk. The present configuration is one in which the two objective lenses are in a so-called Tan arrangement, and the present invention is advantageous for an optical pickup having such a configuration.

In accordance with the present invention, it is possible to provide an optical pickup that is provided with a diffractive optical element in the optical path through which returned light passes, and in which a tracking error signal can be suitably obtained using a photodetector having a general-purpose light-receiving pattern. The present invention is applicable to optical pickups in which two object lenses are in a Tan arrangement.

## BRIEF DESCRIPTION OF THE DRAWINGS

Fig. 1A is a schematic top view showing the configuration of the optical pickup of the present embodiment;

Fig. 1B is a schematic side view showing the configuration of the optical pickup of the present embodiment;

Fig. 2 is a schematic plan view showing the optical configuration of the optical pickup of the present embodiment;

Fig. 3 is a schematic plan view showing the configuration of a light-receiving pattern formed on a photodetector provided to the optical pickup of the present embodiment;

Fig. 4A is a diagram for describing a diffractive optical element provided to the optical pickup of the present embodiment, and is a schematic view showing the configuration of returned light that is incident on the diffractive optical element;

Fig. 4B is a diagram for describing a diffractive optical element provided to the optical pickup of the present embodiment, and is a schematic plan view showing the configuration of the diffractive optical element;

Fig. 5 is a schematic view showing an image of a light spot formed on the photodetector by the returned light of BD laser light in the optical pickup of the present embodiment;

Fig. 6 is a schematic view showing the relationship between the diffractive optical element and the second main light receiver on which the +first order light diffracted by the diffractive optical element is focused in the optical pickup of the present embodiment;

Fig. 7 is a schematic view showing an image of a light spot formed on the photodetector by the returned light of DVD laser light in the optical pickup of the present embodiment;

Fig. 8A is a diagram for describing the first modified example related the configuration of the diffraction region of the diffractive optical element provided to the optical pickup of the present embodiment;

Fig. 8B is a diagram for describing the second modified example related the configuration of the diffraction region of the diffractive optical element provided to the optical pickup of the present embodiment;

Fig. 9A is a schematic view for describing a conventional configuration example (configuration of the Tan arrangement) of an optical pickup having two objective lenses;

Fig. 9B is a schematic view for describing a conventional configuration example (configuration of the Rad arrangement) of an optical pickup having two objective lenses;

Fig. 10A is a diagram for describing the case in which two objective lenses are arranged in a row in the Tan direction, and is a first schematic view showing the relationship between a track and a light spot focused on the optical disk; and

Fig. 10B is a diagram for describing the case in which two objective lenses are arranged in a row in the Tan direction, and is a second schematic view showing the relationship between a track and a light spot focused on the optical disk.

## DETAILED DESCRIPTION OF PREFERRED EMBODIMENTS

Embodiments of the optical pickup of the present invention are described in detail below with reference to the drawings. The optical pickup of the present embodiment is compatible with three types of optical disk: BD, DVD, and CD

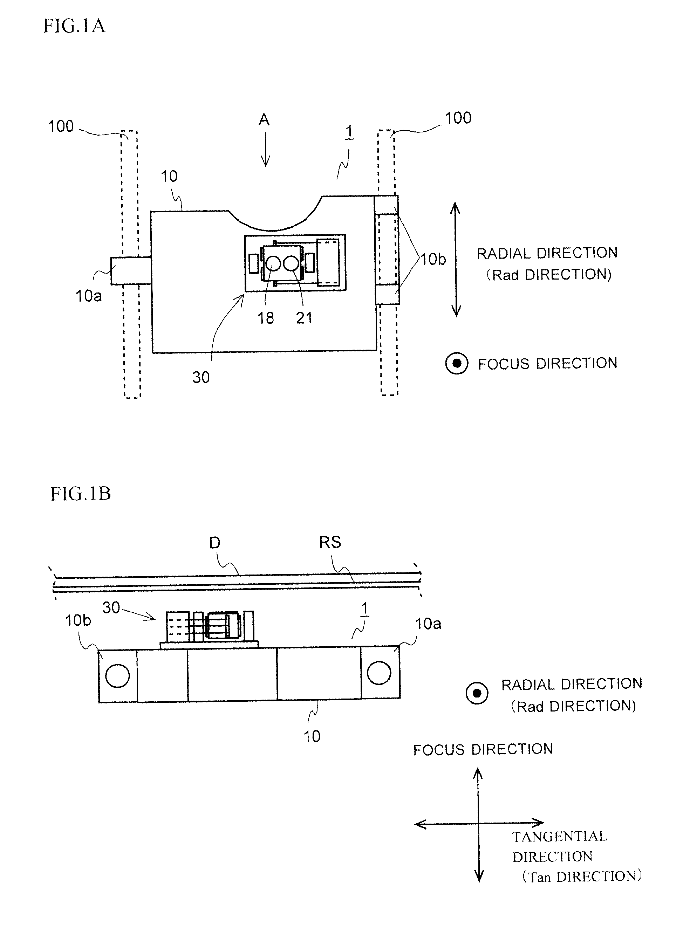

Figs. 1A and 1 B are schematic plan views showing the configuration of the optical pickup of the present embodiment, wherein Fig. 1A is a top view of the optical pickup, and Fig. 1B is a side view showing of the optical pickup. Fig. 1B is a view along the arrow A shown in Fig. 1A. Fig. 1B also shows an optical disk D in order to facilitate understanding.

The optical pickup 1 of the present embodiment has a configuration provided with a pickup base 10, and an objective lens actuator 30 fixedly arranged on the pickup base 10, as shown in Figs. 1A and 1B.

Bearing units 10a, 10b are provided to the left and right end parts of the pickup base 10. The pickup base 10 is slidably supported on guide shafts 100 (indicated by broken lines in Fig. 1A) provided to the optical disk device (a device for playback and recording of the optical disk D) by the bearing units 10a, 10b. The guide shafts 100 provided to the optical disk device are arranged so as to extend in a radial direction (Rad direction). The optical pickup 1, which is capable of sliding on the guide shafts 100, can access a desired address of the rotating optical disk D to read or write information.

The objective lens actuator 30 is a device that allows the two objective lenses 18, 21 provided to the optical system of the optical pickup 1 to move in the focus direction and the tracking direction (same as the Rad direction).

In the optical pickup 1, focusing control must be carried out so that the focal position of the objective lenses 18, 21 conforms to the information-recording surface RS of the optical disk D when information is to be read or written. Also, in the optical pickup 1, tracking control must be carried out so that the position of the light spot focused on the information-recording surface RS of the optical disk D by the objective lenses 18, 21 follows the tracks on the optical disk when information is to be read or written. The objective lens actuator 30 allows these focusing and tracking controls to be carried out.

The objective lens actuator 30 of the present embodiment is also capable of demonstrating a tilt function for adjusting the slope in relation to the optical axis of the objective lenses 18, 21. The objective lens actuator 30 has a lens holder for holding the objective lenses 18, 21 and is configured to swingably support the lens holder using a wire. Such a type of objective lens actuator is well known, and a detailed description is therefore omitted herein.

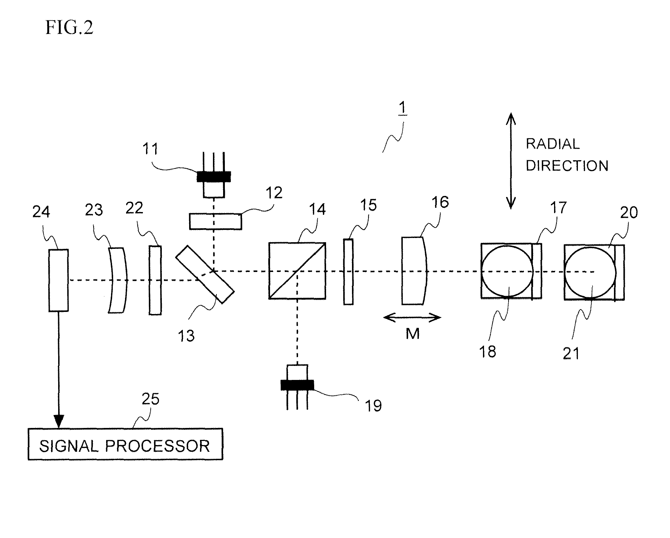

Fig. 2 is a schematic plan view showing the optical configuration of the optical pickup of the present embodiment. A first semiconductor laser 11 is a two-wavelength laser, and has a light-emitting point (an example of the first light source of the present invention) for emitting DVD laser light (for example, laser light in the 650-nm wavelength band; an example of light of a first wavelength of the present invention), and a light-emitting point (an example of the second light source of the present invention) for emitting CD laser light (for example, laser light in the 780-nm wavelength band; an example of light of a second wavelength of the present invention). The DVD laser light and CD laser light can be switchably emitted. Such a two-wavelength laser may, for example, be a monolithic type or a hybrid type.

The laser light emitted from the first semiconductor laser 11 passes through a grating 12 (an example of the second diffractive optical element of the present invention) and arrives at a beam splitter 13. The grating 12 is arranged to divide the DVD laser light into three beams composed of a main beam and two sub beams. The laser light reflected by the beam splitter 13 passes through a polarized beam splitter 14, a 1/4 wavelength plate 15, and a collimating lens 16, is reflected by a first raising mirror 17, and arrives at the first objective lens 18 above the first raising mirror 17. The first objective lens 18 has a function for focusing incident laser light on the information-recording surface RS of the optical disk D (see Fig. 1B).

The laser light focused on the information-recording surface RS by the first objective lens 18 is reflected by the information-recording surface RS. The reflected light (returned light) passes through the first objective lens 18, is thereafter reflected by the first raising mirror 17, and is sequentially transmitted by the collimating lens 16, the 1/4 wavelength plate 15, the polarized beam splitter 14, and the beam splitter 13. The laser light transmitted by the beam splitter 13 is focused on a photodetector 24 via a sensor optical system composed of a diffractive optical element 22 (an example of the first diffractive optical element of the present invention) and a sensor lens 23 that includes a cylindrical surface. The photodetector 24 functions as photoelectric conversion means for converting the received optical signal into an electric signal. The electric signal outputted from the photodetector 24 is sent to a signal processor 25. A replay signal, an FE signal, a TE signal, and the like are generated in the signal processor 25.

The controller (not shown) of the optical pickup 1 controls the driving of the objective lens actuator 30 on the basis of the FE signal and TE signal generated by the signal processor 25 in order to carry out focusing control and tracking control.

A second semiconductor laser 19 is capable of emitting BD laser light (for example, laser light in the 405-nm wavelength band; an example of light of a third wavelength of the present invention). The second semiconductor laser 19 is a light source for emitting light of a single wavelength, and is an example of the third light source of the present invention. The laser light emitted from the second semiconductor laser 19 is reflected by the polarized beam splitter 14, transmitted by the 1/4 wavelength plate 15, the collimating lens 16, and the first raising mirror 17, and reflected by a second raising mirror 20. The laser light reflected by the second raising mirror 20 arrives at a second objective lens 21 above the second raising mirror 20. The second objective lens 21 has a function for focusing incident laser light on the information-recording surface RS of the optical disk D (see Fig. 1B).

The laser light focused on the information-recording surface RS by the second objective lens 21 is reflected by the information-recording surface RS. The reflected light (returned light) passes through the second objective lens 21, is then reflected by the second raising mirror 20, passes through the first raising mirror 17, and thereafter arrives at the photodetector 24 in the same manner as the case in which the laser light emitted from the first semiconductor laser 11 is reflected by the optical disk D. Also, the electric signal obtained by photoelectric conversion in the photodetector 24 is outputted to the signal processor 25.

The polarized beam splitter 14 is an optical member that acts on the BD laser light. Also, the collimating lens 16 is capable of moving in the optical axis direction M (left/right direction in Fig. 2), and the position thereof is suitably moved in accordance with the type of optical disk D or the like. The first raising mirror 17 is a dichroic mirror. Also, the reason for the arrangement in which a cylindrical surface is provided to the sensor lens 23 to impart an astigmatism is to make it possible to obtain an FE signal using the astigmatic method, which is a known technique.

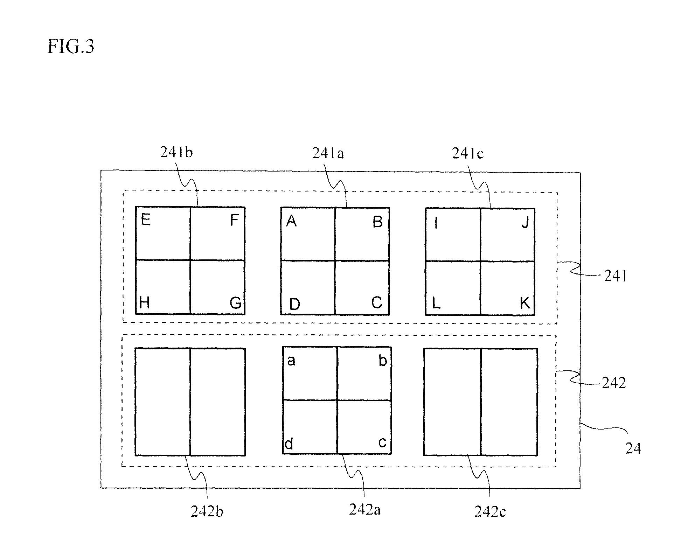

Fig. 3 is a schematic plan view showing the configuration of a light-receiving pattern formed on a photodetector provided to the optical pickup of the present embodiment. In the present embodiment, a configuration is adopted in which DVD laser light and CD laser light are emitted using a two-wavelength laser 11. With the two-wavelength laser 11, the position of the point for emitting DVD laser light and the position of the point for emitting CD laser light are offset from each other. More specifically, the optical axes are offset for the DVD laser light and the CD laser light, and the light-receiving position in the photodetector 24 is different for the DVD laser light and the CD laser light. Therefore, the photodetector 24 is provided with a first detector 241 used for DVD, and a second detector 242 used for CD.

In the optical pickup 1 of the present embodiment, the optical axis of the BD laser light is provided so as to substantially match the optical axis of the DVD laser light. However, the BD laser light is adapted to be detected both by the first detector 241 and by the second detector 242, as described below.

The first detector 241 has a first main light receiver 241a and two first sub light receivers 241b, 241c, each of which is quadrisected into a two-by-two square matrix. The three light receivers 241a to 241c are aligned in a row, with the first main light receiver 241a in the middle. Also, the second detector 242 has a second main light receiver 242a quadrisected into a two-by-two square matrix, and two second sub light receivers 242b, 242c bisected into a bisected square. The three light receivers 242a to 242c are aligned in a row, with the second main light receiver 242a in the middle, so as to be parallel to the lineup of the first detector 241. The second detector 242 is arranged in a row with the first detector 241, and the second main light receiver 242a and the first main light receiver 241a are adjacent to each other. The first detector 241 and second detector 242 have a general-purpose light-receiving pattern conventionally used in the DPP method and the like.

In Fig. 3, the left/right direction corresponds to the direction in which the light spot moves in the case that the first objective lens 18 has moved in the tracking direction. In the present embodiment, the first detector 241 and the second detector 242 have different configurations (configurations with different light-receiving patterns), but the configuration used in the first detector 241 or the configuration used in the second detector 242 may be used in both of the detectors 241, 242. The configurations used in the first detector 241 and the second detector 242 may be reversed from the case of the present embodiment. Also, the second detector 242 may be composed solely of a main light receiver quadrisected into a two-by-two square matrix.

In the optical pickup 1 having such a configuration, an FE signal produced by the so-called astigmatic method can be obtained using the computational formula shown in formula (1) in the case of DVD compatibility. A TE signal produced by the DPP method can be obtained using the computational formula shown in formula (2). These signals may be used to carry out focusing control and tracking control in which the objective lens actuator 30 is used.

$$FE = (A + C) - (B + D) \qquad (1)$$

$$TE = (A + D) - (B + C) - k((E + H + I + L) - (F + G + J + K)) \qquad (2)$$

The alphabetic letters used in formulas (1) and (2) indicate signals outputted from the regions of the light receivers 241a to 241c (light receivers of the first detector 241) shown in Fig. 3. Also, k is a suitably determined coefficient. The FE and TE signals are generated by the signal processor 25.

In the optical pickup 1, an FE signal based on the so-called astigmatic method can be obtained using the computational formula shown in formula (3) in the case of CD compatibility.

$$FE = (a + c) - (b + d) \qquad (3)$$

The alphabetic letters used in formula (3) indicate signals outputted from the regions of the second main light receiver 242a (light receiver of the second detector 242) shown in Fig. 3.

The TE signal in the case of CD compatibility can be obtained by the known differential phase detection (DPD) method by using a signal obtained from the second main light receiver 242a. However, the TE signal in the case of CD compatibility may also be obtained using the so-called three-beam method. The resulting FE and TE signals may be used to carry out focusing control and tracking control in which the objective lens actuator 30 is used.

In the optical pickup 1 of the present embodiment, the two objective lenses 18, 21 are in a Tan arrangement, and the center of the second objective lens 21 used in the case of BD compatibility is in a position offset from the reference plane R described above (see FIG. 9A). Therefore, a TE signal cannot be obtained using the DPP method in the case of BD compatibility. In view of this point, and with consideration given to ensuring improvement in the light utilization ratio, a TE signal is adapted to be obtained using light diffracted by the diffractive optical element 22 in the optical pickup 1 in the case of BD compatibility. Computation for obtaining the TE signal will be shown after the configuration of the diffractive optical element 22 has been described.

In the case of BD compatibility as well, the FE signal can be obtained using the astigmatic method in the same manner as the case of DVD compatibility.

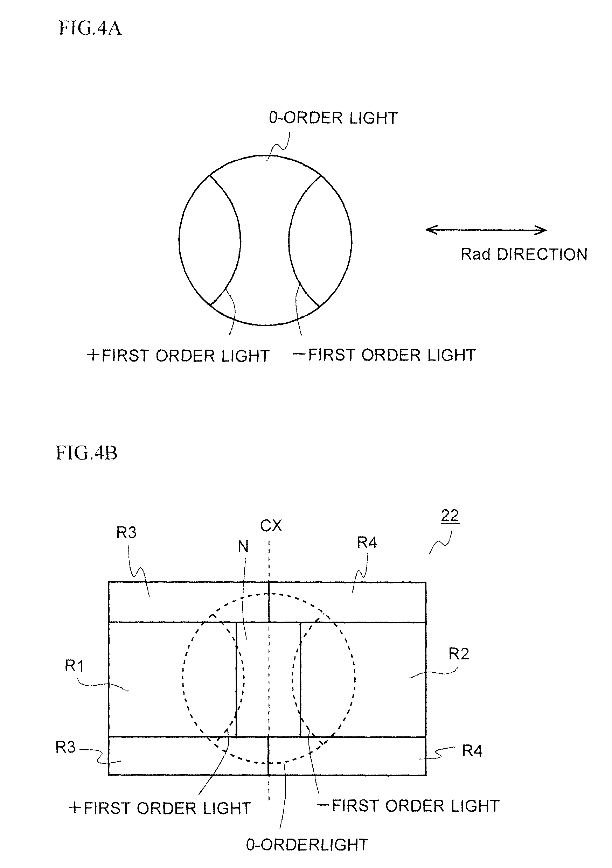

Figs. 4A and 4B are diagrams for describing a diffractive optical element provided to the optical pickup of the present embodiment, wherein Fig. 4A is a schematic view showing the configuration of returned light that is incident on the diffractive optical element, and Fig. 4B is a schematic plan view showing the configuration of diffractive optical element. In Fig. 4B, the returned light is shown by a broken line so as to facilitate understanding of the relationship between the diffractive optical element and the returned light incident thereto.

The tracks formed on the optical disk D act as a diffraction grating for the light incident on the optical disk D. Therefore, the returned light (reflected light) reflected by the information-recording surface RS of the optical disk D is divided, and zero-order light and ±first-order light are included in the returned light. The zero-order light and the ±first-order light are partially superimposed, and light resulting from superposition of the zero-order light and the ±first-order light is incident on the diffractive optical element 22, as shown in Fig. 4A.

The portion (present on the two end sides in the Rad direction) in which the zero-order light and the ±first-order light are superimposed corresponds to a region that includes an AC signal (track-crossing signal) component generated when the light incident on the optical disk D crosses a track. The portion in which the zero-order light and the ±first-order light are not superimposed is a region that indicates a luminous energy that corresponds to the reflectivity of the optical disk D. In other words, this portion does not include a track-crossing signal component, and corresponds to a region that includes an offset component produced, for example, by lens shift, the tilt of the optical disk D, or the like.

The diffractive optical element 22 that acts on light having a BD wavelength has a plurality of diffraction regions R1, R2, R3, R4 that each exhibit a different effect, as shown in Fig. 4B. The diffraction pattern formed in the diffraction regions R1 to R4 can be a relief grating type composed of, for example, rectangular diffractive grooves. The diffraction pattern formed in the diffraction regions R1 to R4 may, for example, be a blazed grating or the like.

The substantially rectangular first diffraction region R1 is provided so that light composed of superimposed zero-order light and +first-order light diffracted by the tracks on the optical disk D can be incident on the region. The substantially rectangular second diffraction region R2 is provided so that light composed of zero-order light and -first-order light diffracted by the tracks on the optical disk D can be incident on the region. A rectangular region N that does not have a diffractive effect is present between the first diffraction region R1 and second diffraction region R2, which are aligned in the Rad direction. The first diffraction region R1 and second diffraction region R2 are arranged in line symmetry with respect to the line of symmetry CX, and have substantially the same area.

The third diffraction region R3, which is formed of two substantially rectangular regions, is provided so that the ±first-order light diffracted by the optical disk D is substantially not incident and zero-order light is incident. Also, the two regions constituting the third diffraction region R3 are adjacently arranged so as to be disposed on both sides of the first diffraction region R1 in relation to the direction perpendicular to the Rad direction. The fourth diffraction region R4, which is formed of two substantially rectangular regions, is provided so that the ±first-order light diffracted by the optical disk D is substantially not incident and zero-order light is incident. Also, the two regions constituting the fourth diffraction region R4 are adjacently arranged so as to be disposed on both sides of the second diffraction region R2 in relation to the direction perpendicular to the Rad direction. The third diffraction region R3 and the fourth diffraction region R4 are symmetrically arranged with respect to the line of symmetry CX in a mutually adjacent state, and the areas of the two are substantially the same.

The ±first-order light diffracted by the optical disk D is preferably not incident at all on the third diffraction region R3 and fourth diffraction region R4.

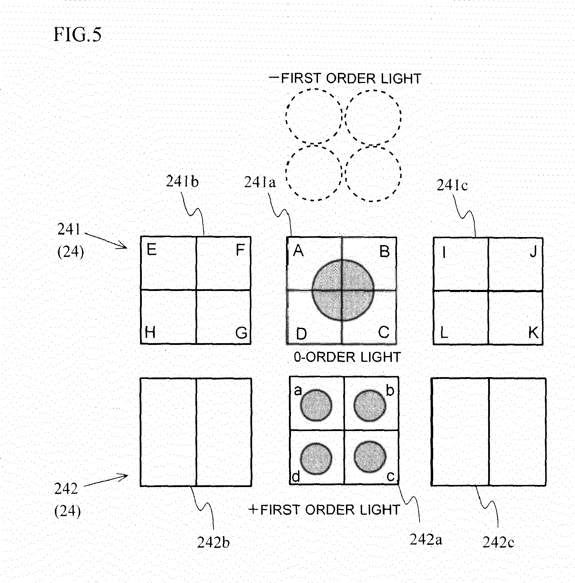

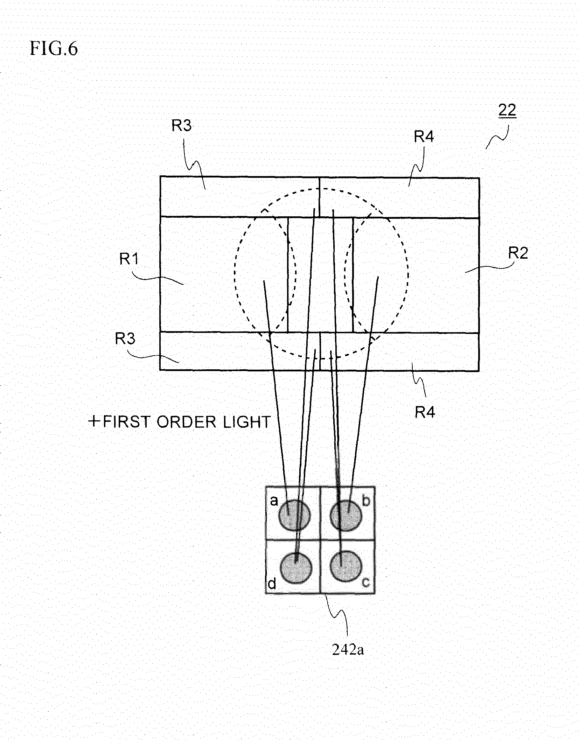

Next, the function of the diffractive optical element 22 provided to the optical pickup 1 will be described with reference to Figs. 5 and 6. Fig. 5 is a schematic view showing an image of a light spot formed on the photodetector by the returned light of BD laser light in the optical pickup of the present embodiment. Fig. 6 is a schematic view showing the relationship between the diffractive optical element and the second main light receiver on which the +first order light diffracted by the diffractive optical element is focused in the optical pickup of the present embodiment.

As part of the returned light of the BD laser light, the zero-order light (the light transmitted by the diffractive optical element 22) in the diffractive optical element 22 forms a light spot on the first main light receiver 241a of the first detector 241, as shown in FIG. 5. An FE signal based on the astigmatic method is generated using the signal outputted from the regions (A to D) of the first main light receiver 241a.

As part of the returned light of the BD laser light, the +first-order light diffracted by the diffractive optical element 22 forms a light spot on the second main light receiver 242a of the second detector 242. More specifically, the +first-order light diffracted by the first diffraction region R1 is focused in region "a" of the second main light receiver 242a, as shown in Fig. 6. The +first-order light diffracted by the second diffraction region R2 is focused in region "b" of the second main light receiver 242a. The +first-order light diffracted by the third diffraction region R3 is focused in region "d" of the second main light receiver 242a. The +first-order light diffracted by the fourth diffraction region R4 is focused in region "c" of the second main light receiver 242a.

In other words, regions "a" and "b" are regions for receiving light that includes a track-crossing signal component (push-pull component). Also, regions "c" and "d" substantially do not include a push-pull component, and are regions for receiving light that mainly includes an offset component.

The diffraction regions R1 to R4 are provided so that an astigmatism of reverse polarity relative to the astigmatism imparted by the cylindrical surface of the sensor lens 23 is imparted to the +first-order light obtained by diffraction in the diffractive optical element 22. Therefore, the beam of +first-order light diffracted by the diffraction regions R1 to R4 of the diffractive optical element 22 is narrowed and focused in the regions "a" to "d" of the second main light receiver 242a.

The +first-order light diffracted by the diffraction regions R1 to R4 can thereby be prevented from departing from the regions "a" to "d" of the second main light receiver 242a, allowing light-receiving balance not to be offset. Also, the position of the photodetector 24 may, for example, become slightly offset due to temperature variation, vibration/ impact, or the like, but adopting a configuration such as that of the present embodiment reduces the possibility that an offset will be produced in the light-receiving balance by such a positional offset.

As part of the returned light of the BD laser light, the -first-order light diffracted by the diffractive optical element 22 forms a light spot on the side opposite, as seen relative to the first main light receiver 241 a, from the position in which the +first-order light forms a light spot. This -first-order light is stray light, is not received by either of the light receivers on the photodetector 24, and is not used in signal generation.

As described above, the diffraction regions R1 to R4 of the diffractive optical element 22 are provided so that an astigmatism of reverse polarity relative to the astigmatism imparted by the cylindrical surface of the sensor lens 23 is imparted to the +first-order light. Therefore, the -first-order light conjugate with the +first-order light forms a large light spot in comparison with the +first-order light. The optical pickup 1 is formed so that this enlarged light spot is not received by any of the light receivers.

In the description above, the +first-order light is received by the second main light receiver 242a and the -first-order light is stray light, but which type of first-order light is plus and which is minus varies depending on the criterion adopted. Therefore, the above arrangement can be redefined so that the -first-order light is received by the second main light receiver 242a and the +first-order light is stray light. In the case that the diffraction pattern formed in the diffraction regions R1 to R4 is configured to have a blazed grating, and the luminous energy of one type of first-order light from among the ±first-order light is set to be substantially zero, the other type of first-order lights can be received by the second main light receiver 242a.

With a configuration such as that described above, a TE signal in which lens shift, a tilt of the optical disk D, and other offset effects are inhibited can be obtained using formula (4) noted below in the case of BD compatibility.

$$TE = (a - b) - k'(d - c) \qquad (4)$$

The alphabetic letters used in formula (4) indicate, for example, signals outputted from the regions of the second main light receiver 242a (light receiver of the second detector 242) shown in Fig. 3. Also, k' is a suitably determined coefficient. The TE signal is generated by the signal processor 25.

The coefficient k' in formula (4) can be experimentally set to a suitable value that allows, for example, a lens shift or other offset to be produced and the offset to be canceled.

Also, with the optical pickup 1 of the present embodiment, the first detector 241 can be jointly used both for DVD compatibility and for BD compatibility, and the second detector 242 can be jointly used both for CD compatibility and for BD compatibility. Therefore, a switch (not shown) is suitably provided so that the signal is outputted in accordance with the type of optical disk.

In accordance with the optical pickup 1 of the present embodiment, a TE signal can be suitably obtained and suitable tracking control can be carried out in cases in which either of the objective lenses is used, even when the first objective lens 18 and the second objective lens 21 are in a Tan arrangement. This approach is extremely advantageous in terms of cost because a general-purpose light-receiving pattern (photodetector) conventionally used in the DPP method, three-beam method, or the like can be used even in a configuration in which a TE signal is obtained using the diffractive optical element 22 arranged in a position through which only returned light passes. In the case of BD compatibility, excellent results are obtained in terms of the light utilization ratio because the laser light used to irradiate the optical disk D is a single beam (a configuration in which light is not divided into three beams by a diffractive optical element and is not used to irradiate the optical disk).

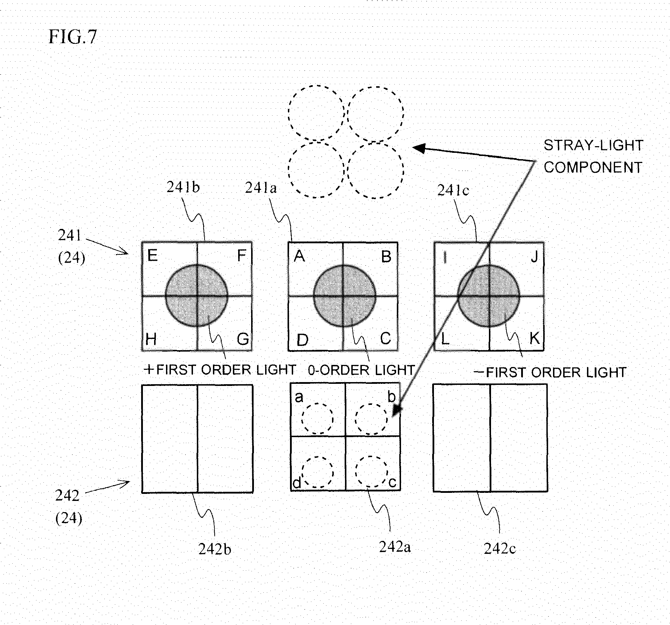

Also, in the optical pickup 1 of the present embodiment, the diffractive optical element 22 is arranged in the optical path through which the returned light passes, producing the advantage that the effect of the diffractive optical element 22 can be inhibited to produce a TE signal in the case of DVD compatibility. This will be described with reference to Fig. 7. Fig. 7 is a schematic view showing an image of a light spot formed on the photodetector by the returned light of DVD laser light in the optical pickup of the present embodiment.

In the case of DVD compatibility, the DVD laser light emitted from the first semiconductor laser 11 is divided by the grating 12 into three beams composed of a main beam and two sub beams, and then used to irradiate the optical disk D. After being reflected by the optical disk D, the main beam is received by the first main light receiver 241 a, one of the two sub beams (+first-order light) is received by the first main light receiver 241b, and the other (-first-order light) is received by the first main light receiver 241c.

The diffractive optical element 22 is configured so as to act on BD laser light. In this case, the diffraction ratio of the DVD laser light can be reduced in the diffractive optical element 22, but it is difficult to bring the diffraction ratio completely to zero. Therefore, light (stray light) diffracted by the diffractive optical element 22 is generated even when DVD laser light is used. However, the diffracted light (stray light) is not received by the first detector 241 in the same manner as in the case described for BD laser light (however, the diffraction angle varies due to the difference in wavelength), as shown in FIG. 7. Therefore, the effect of the diffractive optical element 22 can be inhibited and a TE signal based on the DPP method can be generated in the case of DVD compatibility.

The embodiment described above is an example of the present invention, and the optical pickup of the present invention is not limited to the configuration described above.

For example, the manner in which the +first-order light diffracted by the diffraction regions R1 to R4 is focused in either position (region) of the second main light receiver 242a is not limited to the configuration of the present embodiment and may be suitably modified. This is because the configuration for computing the signal to be outputted from the regions "a" to "d" of the second main light receiver 242a can be adapted by adopting a modification that differs from the case of the present embodiment.

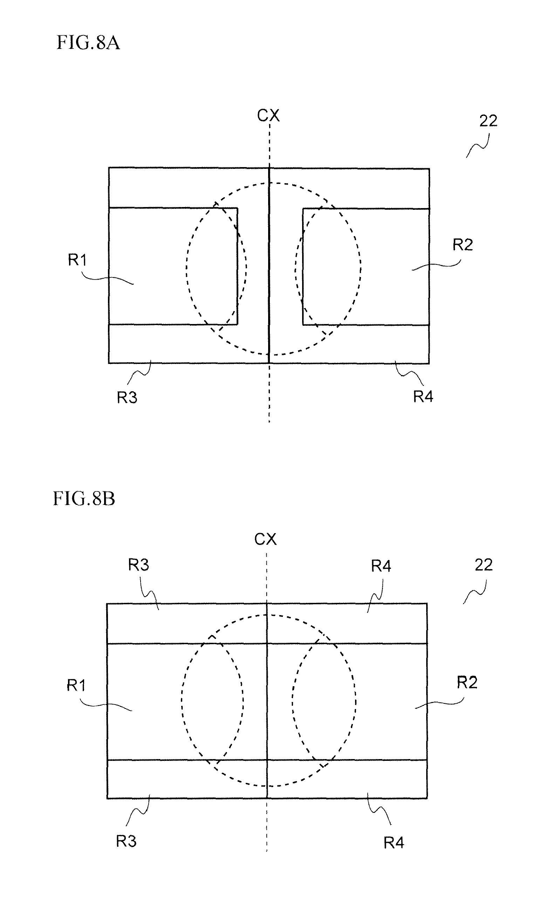

The configuration (pattern) of the diffraction regions of the diffractive optical element 22 described above is merely an example, and the configuration of the diffraction regions can be suitably modified. For example, region N (see Fig. 4B) devoid of diffraction grooves in the center part of the diffractive optical element 22 of the present embodiment may be bisected (divided along the line of symmetry CX), as shown in Fig. 8A, one of the regions may be included in the third diffraction region R3, and the other may be included in the fourth diffraction region R4. In the configuration shown in Fig. 8A, the first diffraction region R1 and the second diffraction region R2 are the same as the case of the present embodiment (the configuration shown in Fig. 4B).

Also, for example, region N devoid of diffraction grooves in the center part of the diffractive optical element 22 of the present embodiment may be bisected (divided along the line of symmetry CX), as shown in Fig. 8B, one of the regions may be included in the first diffraction region R1, and the other may be included in the second diffraction region R2. In the configuration shown in Fig. 8B, the third diffraction region R3 and the fourth diffraction region R4 are the same as the case of the present embodiment (the configuration shown in Fig. 4B).

In the embodiment described above, the TE signal is obtained by the DPP method in the case of DVD compatibility; and the TE signal is obtained using diffracted light from the diffractive optical element 22 in the case of BD compatibility. However, an opposite configuration may be used (the DPP method is used for BD compatibility, and the diffractive optical element 22 is used for DVD compatibility). In this case, for example, the grating 12 of the present embodiment is modified so as to be arranged in front of the second semiconductor laser 19 that emits BD laser light.

The embodiment described above has a configuration in which the first objective lens 18 and the second objective lens 21 are in a Tan arrangement, but the applicable range of the present invention is not limited to this configuration. In other words, the present invention can also be applied to, for example, the case in which the two objective lenses 18, 21 are in a Rad arrangement. The present invention may also be applied to a case in which the number of objective lens provided to the optical pickup is other than two.

It is also apparent that the types of optical disks that can be used with the optical pickup to which the present invention is applied are not limited to those in the embodiment described above.

The present invention is advantageous for an optical pickup in which BD, DVD, and CD can be interchanged.

**Claims**

1.  An optical pickup comprising:

    a photodetector for receiving reflected light from an optical disk; and
    a first diffractive optical element that acts on light of a specific wavelength, the first diffractive optical element being arranged in an optical path for guiding reflected light from the optical disk to the photodetector, wherein the photodetector has:

       a first detector including a first main light receiver divided into a two-by-two square matrix, and
       a second detector including a second main light receiver divided into a two-by-two square matrix, the second detector being arranged in a row with the first detector; and
       in the case that the light of a specific wavelength is used,
       zero-order light of the first diffractive optical element is received by the first main light receiver,
       a first-order light among the ±first-order light diffracted by the first diffractive optical element is received by the second main light receiver, and
       a tracking error signal is generated using an output signal from the second main light receiver.

2.  The optical pickup of Claim 1, wherein
    the first main light receiver and two first sub light receivers arranged so as to be disposed on both sides of the first main light receiver are aligned in a row in the first detector;
    the second main light receiver and two second sub light receivers arranged so to be disposed on both sides of the second main light receiver are aligned in a row in the second detector; and
    the first main light receiver and the second main light receiver are adjacently arranged.

3.  The optical pickup of Claim 1 or 2, wherein
    reflected light reflected by the optical disk includes zero-order light and ±first-order light;
    the first diffractive optical element has:

       a first diffraction region in which light is incident, the light resulting from superposition of zero-order light and +first-order light included in the reflected light,
       a second diffraction region in which light is incident, the light resulting from superposition of zero-order light and -first-order light included in the reflected light, and the second diffraction region being symmetrically arranged in relation to the first diffraction region,
       a third diffraction region wherein the ±first-order light included in the reflected light is entirely not or substantially not incident, and the zero-order light is incident, the third diffraction region being located on the same side as the first diffraction region relative to the line of symmetry between the symmetrically arranged first diffraction region and second diffraction region; and

a fourth diffraction region wherein the ± first-order light included in the reflected light is entirely not or substantially not incident, and the zero-order light is incident, the fourth diffraction region being located on the same side as the second diffraction region relative to the line of symmetry; wherein

either +first-order light or -first-order light from among the ±first-order light diffracted by the diffraction regions of the first diffractive optical element arrives in separate regions of the second main light receiver .

**4.** The optical pickup of Claim 3, further comprising a lens arranged between the first diffractive optical element and the photodetector and provided with a cylindrical surface, wherein

the diffraction regions of the first diffractive optical element are provided so that an astigmatism of reverse polarity relative to an astigmatism imparted by the cylindrical surface is imparted to first-order light that is diffracted by the diffraction regions and arrives at the second main light receiver.

**5.** The optical pickup of any of Claims 1 to 4, further comprising:

a first light source for emitting light of a first wavelength;
a second light source for emitting light of a second wavelength; and
a third light source for emitting light of a third wavelength, wherein
a tracking error signal is generated using a signal outputted from the first detector in the case that the light of a first wavelength is used;
a tracking error signal is generated using a signal outputted from the second detector in the case that the light of a second wavelength is used; and
the light of a third wavelength is the light of a specific wavelength.

**6.** The optical pickup of Claim 5, wherein

light of a first wavelength emitted from the first light source is divided into a main beam and two sub beams by a second diffractive optical element and is incident on the optical disk; and

a tracking error signal is obtained by the differential push-pull (DPP) method in the case that the light of a first wavelength is used.

**7.** The optical pickup of Claim 5 or 6, further comprising:

a first objective lens for focusing the light of a first wavelength and the light of a second wavelength on an information-recording surface of the optical disk; and
a second objective lens for focusing the light of a third wavelength on an information-recording surface of the optical disk.

**8.** The optical pickup of Claim 7, wherein the first objective lens and the second objective lens are arranged in a row in a direction that is parallel to a tangential direction of tracks on the optical disk.

FIG.1A

RADIAL DIRECTION
(Rad DIRECTION)

⊙ FOCUS DIRECTION

FIG.1B

⊙ RADIAL DIRECTION
(Rad DIRECTION)

FOCUS DIRECTION

TANGENTIAL
DIRECTION
(Tan DIRECTION)

FIG.2

FIG.3

FIG.4A

0-ORDER LIGHT

Rad DIRECTION

+FIRST ORDER LIGHT    −FIRST ORDER LIGHT

FIG.4B

R3    CX    R4    22

N

R1    R2

R3    R4

+FIRST ORDER LIGHT    −FIRST ORDER LIGHT

0-ORDERLIGHT

FIG.5

−FIRST ORDER LIGHT

241b    241a    241c

241
(24)

| E | F |
| H | G |

| A | B |
| D | C |

0-ORDER LIGHT

| I | J |
| L | K |

242
(24)

| a | b |
| d | c |

+FIRST ORDER LIGHT

242b    242a    242c

FIG.6

+FIRST ORDER LIGHT

242a

FIG.7

STRAY-LIGHT
COMPONENT

241b    241a    241c

241
(24)

| E | F |
| H | G |

| A | B |
| D | C |

| I | J |
| L | K |

+FIRST ORDER LIGHT    0-ORDER LIGHT    −FIRST ORDER LIGHT

242
(24)

| a | b |
| d | c |

242b    242a    242c

FIG.8A

CX

22

R1

R2

R3

R4

FIG.8B

CX

R3

R4

22

R1

R2

R3

R4

## FIG.9A
CONVENTIONL ART

## FIG.9B
CONVENTIONL ART

Rad DIRECTION

Tan DIRECTION

## FIG.10A
CONVENTIONL ART

## FIG.10B
CONVENTIONL ART

Rad DIRECTION

Tan DIRECTION

**EP 2 450 891 A1**

Europäisches
Patentamt

European
Patent Office

Office européen
des brevets

# EUROPEAN SEARCH REPORT

**Application Number**

EP 11 18 8433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 391 884 A2 (MATSUSHITA ELECTRIC IND CO LTD [JP]) 25 February 2004 (2004-02-25) * embodiments 10-12, 19,20,25;figures 20-25, 37-50,63-65 * | 1-8 | INV. G11B7/09 G11B7/13 G11B7/135 |
| X,D | US 2010/014410 A1 (NAKAO TAKASHI [JP] ET AL) 21 January 2010 (2010-01-21) * first embodiment, sixth embodiment;figures 1-8,27-30 * | 1-8 | |
| A | US 2007/164241 A1 (NAKANO FUMIAKI [JP] ET AL) 19 July 2007 (2007-07-19) * paragraph [0067] - paragraph [0109]; figures 1-7 * | 1-8 | |

|  |  |
|---|---|
|  | TECHNICAL FIELDS SEARCHED (IPC) |
|  | G11B |

The present search report has been drawn up for all claims

| Place of search | Date of completion of the search | Examiner |
|---|---|---|
| The Hague | 20 February 2012 | Skaropoulos, N |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 18 8433

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2012

| Patent document cited in search report | | Publication date | Patent family member(s) | | Publication date |
|---|---|---|---|---|---|
| EP 1391884 | A2 | 25-02-2004 | CN | 1485828 A | 31-03-2004 |
| | | | EP | 1391884 A2 | 25-02-2004 |
| | | | EP | 2264704 A2 | 22-12-2010 |
| | | | EP | 2264705 A2 | 22-12-2010 |
| | | | EP | 2264706 A2 | 22-12-2010 |
| | | | JP | 4679611 B2 | 27-04-2011 |
| | | | JP | 2008282528 A | 20-11-2008 |
| | | | JP | 2011054275 A | 17-03-2011 |
| | | | JP | 2011081904 A | 21-04-2011 |
| | | | KR | 20040018219 A | 02-03-2004 |
| | | | KR | 20050109905 A | 22-11-2005 |
| | | | US | 2005199778 A1 | 15-09-2005 |
| | | | US | 2007195663 A1 | 23-08-2007 |
| | | | US | 2008259750 A1 | 23-10-2008 |
| US 2010014410 | A1 | 21-01-2010 | JP | 4596290 B2 | 08-12-2010 |
| | | | JP | 2010044847 A | 25-02-2010 |
| | | | US | 2010014410 A1 | 21-01-2010 |
| US 2007164241 | A1 | 19-07-2007 | JP | 4433315 B2 | 17-03-2010 |
| | | | JP | 2007213754 A | 23-08-2007 |
| | | | KR | 20070075302 A | 18-07-2007 |
| | | | TW | 200805348 A | 16-01-2008 |
| | | | US | 2007164241 A1 | 19-07-2007 |

EPO FORM P0459

For more details about this annex : see Official Journal of the European Patent Office, No. 12/82

**EP 2 450 891 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010044847 A